# EUROPEAN PATENT APPLICATION

(11) **EP 2 943 016 A1**
(43) Date of publication of application: **11.11.2015**
(21) Application number: 14167586.8
(22) Date of filing: 08.05.2014
(51) Int. Cl.: H04W 48/16, H04W 48/10

(54) **Coverage extension in wireless communication**

(71) Applicant: FUJITSU LIMITED, Kawasaki-shi, Kanagawa 211-8588 (JP)
(72) Inventor: Bucknell, Paul, Brighton, BN2 1SP (GB); Moulsley, Timothy, Caterham, Surrey CR3 5EE (GB)
(74) Representative: Stebbing, Timothy Charles

(57) **Abstract**

A method for operating and controlling devices (12) connected to a network which allows the transmission of small data packets after reading System Information. The network can control a cell to allow access from devices (12) using an extended coverage mode, ECM, outside the normal coverage area of the cell. Initial access from devices in the extended cell coverage area can be scheduled (S104, S110) with the use of a pre-defined scheduled time for the devices to access the cell. A transmission of a schedule for ECM operation to the devices (12) that are using the ECM is provided (S144) after an ECM capable device has been moved from idle to connected mode for the first time, and can be updated (S146) at every scheduled opportunity when the device subsequently moves to connected mode. In addition, embodiments of the present invention provide a modified RACH procedure (S122, S128, S134, S140) to be followed by devices (12) taking advantage of the ECM.

## Description

### Field of the Invention

The present invention relates to a wireless communication method in which devices (terminals) connect to cells of a wireless network. The present invention further relates to a wireless communication system, a terminal, to a base station and a computer program for use in said method.

Particularly, but not exclusively, the present invention relates to coverage extension in a wireless communication system compliant with the LTE (Long Term Evolution) and LTE-Advanced radio technology standards as described in Release 11 and subsequent of the 3GPP specification series.

### Background of the Invention

Wireless communication systems are widely known in which base stations (BSs) provide "cells" and communicate with terminals within range of the BSs. In LTE for example, the base stations are generally called eNBs or eNodeBs and the terminals are called user equipments or UEs.

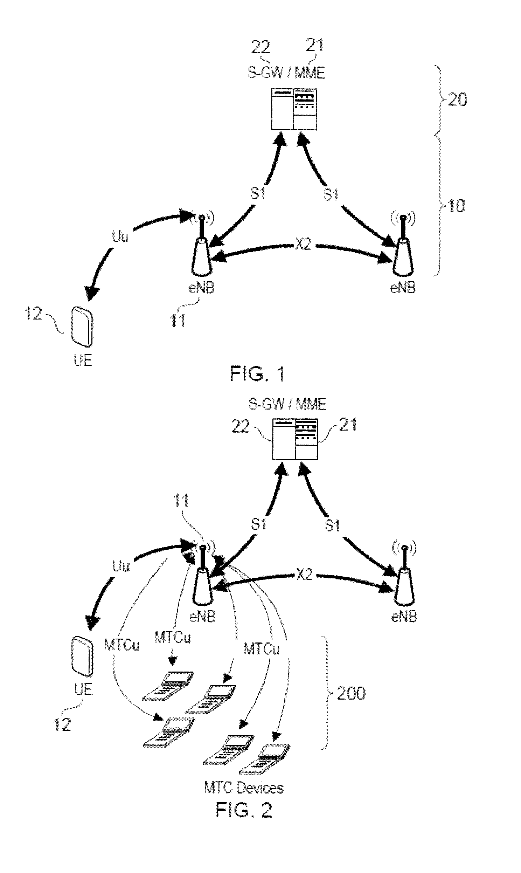

The network topology in LTE is illustrated in Figure 1. As can be seen, each terminal or UE 12 connects over a wireless link via a Uu interface to a base station or eNodeB 11, and the network of eNodeBs is referred to as the eUTRAN 10. Each eNodeB 11 in turn is connected by a (usually) wired link using an interface called S1 to higher-level or "core network" entities, including a Serving Gateway (S-GW 22), and a Mobility Management Entity (MME 21) for managing the system and sending control signalling to other nodes, particularly eNodeBs, in the network. In addition, a PDN or Packet Data Network Gateway (P-GW) is present, separately or combined with the S-GW 22, to exchange data packets with any packet data network including the Internet. The core network 20 is called the EPC or Evolved Packet Core.

Whilst LTE was originally conceived to serve mobile telephones of human users, increasing attention is being paid to Machine-to-Machine (M2M) communication.

M2M communication, usually referred to in the context of LTE as Machine Type communication (MTc), is a form of data communication which involves one or more entities that do not necessarily need human interaction; in other words the 'users' may be machines.

MTc is different from current communication models as it potentially involves very large number of communicating entities (MTc devices) with little traffic per device. Examples of such applications include: fleet management, smart metering, product tracking, home automation, e-health, etc.

MTc has great potential for being carried on wireless communication systems (also referred to here as mobile networks), owing to their ubiquitous coverage. However, for mobile networks to be competitive for mass machine-type applications, it is important to optimise their support for MTc. Current mobile networks are optimally designed for Human-to-Human communications, but are less optimal for machine-to-machine, machine-to-human, or human-to-machine applications. It is also important to enable network operators to offer MTc services at a low cost level, to match the expectations of mass-market machine-type services and applications.

In addition, MTc devices may be located in areas with very poor coverage (i.e., low SINR), and it is desirable to be able to provide some kind of service even under such conditions.

To fully support these service requirements, it is necessary to improve the ability of mobile networks to handle machine-type communications.

In the LTE network illustrated in Figure 2, a group of MTc devices 200 is served by an eNodeB 11 which also maintains connections with normal UEs 12. The eNodeB receives signalling from the MME 21 and data (for example, a request for a status report from a supervisor of the MTc devices) via the S-GW 22.

In case the Uu interface is not always sufficient, there may be a MTcu interface defined analogous to the Uu interface, and the MTc devices will be served in a similar way to normal user equipments by the mobile networks. When a large number of MTc devices connect to the same cell of a UMTS RNS or an LTE eNodeB, each of the devices will need resources to be allocated to support the individual devices' applications even though each MTc device may have little data.

In the remainder of this specification, the term "UE" includes "MTc device" unless otherwise demanded by the context.

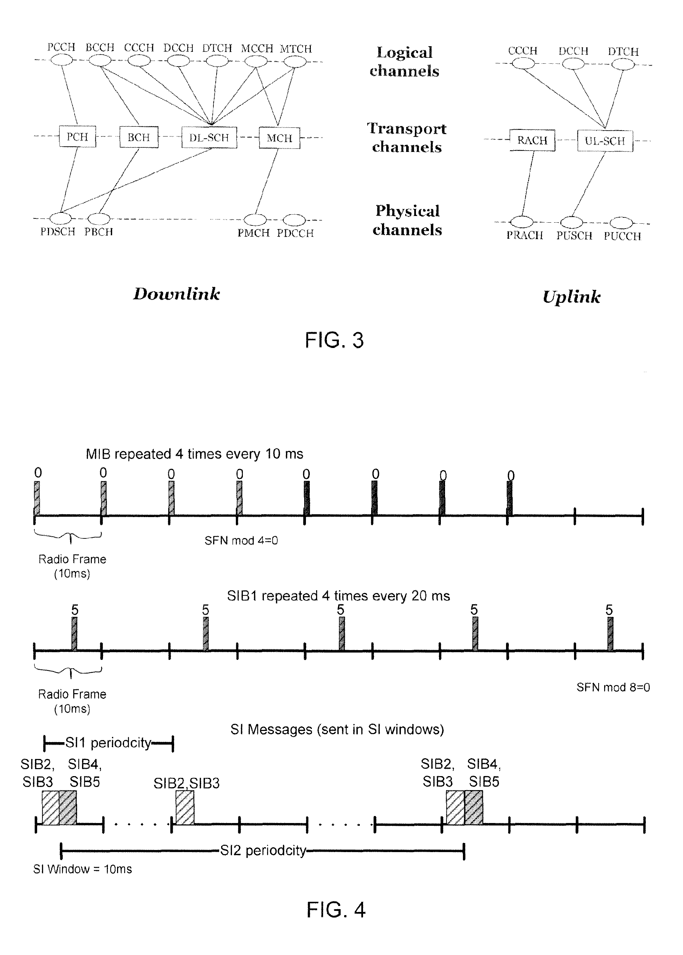

In LTE, several channels for data and control signalling are defined at various levels of abstraction within the system. Figure 3 shows some of the channels defined in LTE at each of a logical level, transport layer level and physical layer level, and the mappings between them.

At the physical layer level, on the downlink, each eNB broadcasts a number of channels and signals to all UEs within range, whether or not the UE is currently being served by that cell. Of particular interest for present purposes, these include a Physical Broadcast Channel PBCH as shown in Fig. 3. PBCH carries a so-called Master Information Block (MIB), which gives, to any UEs within range of the signal, basic information as described below. Primary and Secondary Synchronization Signals (PSS/SSS) are also broadcast to all devices within range. In addition to establishing a timing reference for a cell, these carry a physical layer cell identity and physical layer cell identity group for identifying the cell.

In an LTE system, transmission is organized in "frames" each 10ms in duration containing twenty slots of 0.5ms, two consecutive slots (hence, 1 ms) being referred to as a "subframe". Conventionally, each of the PSS and SSS is transmitted twice per frame, in other words with a 5ms periodicity (and consequently, only in some subframes). For example, PSS and SSS are both transmitted on the first and sixth subframe of every frame. Successfully decoding the PSS and SSS allows a UE to obtain the timing and cell ID for a cell.

Once a UE has decoded a cell's PSS and SSS it is aware of the cell's existence and may decode the MIB in the PBCH referred to earlier. Like the synchronization signal SSS, PBCH is scrambled using a sequence based on the cell identity. The PBCH is transmitted every frame, thereby conveying the MIB over four frames.

The MIB includes some of the basic information which the UE needs to join the network, including system bandwidth, number of transmit antenna ports, and system frame number (SFN). Reading the MIB enables the UE to receive and decode the SIBs, in particular SIB1.

The UE will then wish to measure the cell's reference signals (RSs). For current LTE releases, the first step is to locate the common reference signals CRS, the location in the frequency domain of which depends on the PCI. Then the UE can decode the broadcast channel (PBCH). In addition, the UE can decode PDCCH and receive physical layer control signalling.

User data as well as System Information Blocks (SIBs) are contained in a transport channel DL-SCH, carried on the Physical Downlink Shared Channel (PDSCH).

The SIBs differ in their information content and are numbered SIB1, SIB2, and so forth. SIB1 contains cell-access related parameters and information on the scheduling of other SIBs. Thus, SIB1 has to be received by a device before it can decode other SIBs such as SIB2. SIB2 contains information including random access channel RACH parameters, referred to below. Currently, SIBs are defined up to SIB14, although not all SIBs need to be received in order for a UE to access the network. For example, SIB10 and SIB11 relate to an Earthquake and Tsunami Warning System. SIB14 is intended for use with so-called Enhanced Access Barring, EAB, which has application particularly to MTc devices.

For network access, generally SIB1 and SIB2 are the most important, in other words, at a minimum, a UE must normally decode SIB1 and SIB2, in that order, in order to communicate with the eNB. In the special case of MTc devices subject to EAB, SIB14 is also important.

Figure 4 illustrates the timings of MIB and SIBs in LTE. As can be seen from Figure 4, the MIB is broadcast relatively frequently, being transmitted four times in each frame. The SIBs, which unlike MIB are transmitted on PDSCH, occur less frequency. The most essential SIB1 is repeated four times in every other frame, whilst SIB2 and further SIBs typically occur less frequently still. The SIBs are repeated to increase the chance of their being correctly received by a UE, since otherwise, the UE may have to wait an appreciable length of time for the next transmission. This can be a problem particularly for devices at a cell edge or in a coverage hole where reception is poor.

The Physical Random Access Channel PRACH, referred to in connection with Figure 3, will now be explained. As already mentioned, UEs which have obtained timing synchronization with the network will be scheduled with uplink resources which are orthogonal to those assigned to other UEs. PRACH is used to carry the Random Access Channel (RACH) for accessing the network if the UE does not have any allocated uplink transmission resource. Thus, initiation by the UE of the transport channel RACH implies use of the corresponding physical channel PRACH, and henceforth the two terms RACH and PRACH will be used interchangeably to some extent.

Thus, RACH is provided to enable UEs to transmit signals in the uplink without having any dedicated resources available, such that more than one terminal can transmit in the same PRACH resources simultaneously. The term "Random Access" is used because (except in the case of contention-free RACH, described below) the identity of the UE (or UEs) using the resources at any given time is not known in advance by the network (incidentally, in this specification the terms "system" and "network" are used interchangeably). So-called "signatures" (see below) are employed by the UEs to allow the eNB to distinguish between different sources of transmission.

RACH can be used by the UEs in either of contention-based and contention-free modes. In contention-based access, UEs select any signature at random, at the risk of "collision" at the eNB if two or more UEs accidentally select the same signature. Contention-free access avoids collision, by the eNB informing each UE which signature it may use (and thus implying that the UE is already connected to the network). In LTE, at least for Releases up to Release 11, contention free RACH is only applicable for handover, DL data arrival and positioning.

Situations where the RACH process is used include:
- Initial access from RRC_IDLE
- RRC connection re-establishment
- Handover
- DL data arrival in RRC_CONNECTED (when non-synchronised)
- UL data arrival in RRC_CONNECTED (when non-synchronised, or no SR resources are available)
- Positioning (based on Timing Advance)

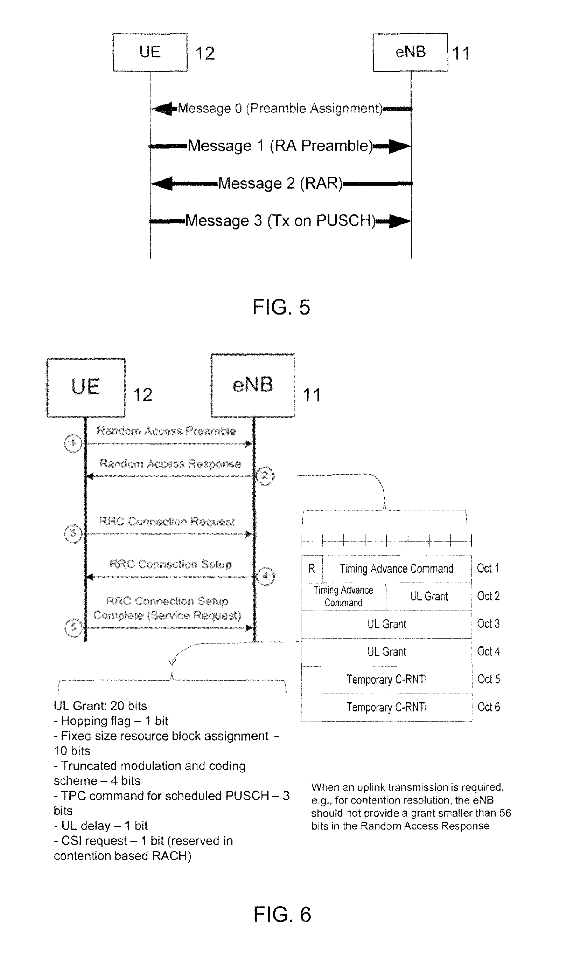

Referring to Figures 5 and 6, the Physical Random Access Channel PRACH typically operates as follows:-
(i) The network, represented in Figures 5 and 6 by an eNB 11, informs each UE 12 of the signature to be used for contention-free access, as indicated by "Message 0" in Figure 5. Periodically, the eNB transmits the broadcast channel PBCH mentioned above, which can be received by all UEs within range (whether or not they are connected to the eNB). The PBCH (not shown in Figures 5 and 6) is transmitted once per frame, and is repeated four times (i.e. a complete set of repetitions spans four frames). The PBCH includes the MIB as already mentioned.

The UE 12 receives PBCH for the cell of interest. The information in the PBCH allows the UE to receive further SIBs (which are transmitted using PDSCH), in particular SIB1 and SIB2.
(ii) As already mentioned, PRACH related parameters are contained in SIB2, including:
   - time/frequency resources available for PRACH
   - signatures available for contention-based RACH (up to 64)
   - signatures corresponding to small and large message sizes.

The signatures each have a numerical index and the available signatures are indicated by use of a number, with all signatures identified by indices up to this number being available for contention-based access.
(iii) The next step differs depending on whether contention-based access or contention-free access is being attempted. For contention-based access the UE selects, at random, a PRACH signature (also called a PRACH signature) according to those available for contention based access and the intended message size. In the case of contention-free access, the UE employs the PRACH signature which has previously been assigned to it via higher-level signalling.
(iv) The UE 12 transmits the PRACH signature (labelled "Message 1" in Figures 5 and 6, also labelled (1) in Figure 6) on the uplink of the serving cell. The eNB 11 receives Message 1 and estimates the transmission timing of the UE.
(v) The UE 12 monitors a specified downlink channel for a response from the network (in other words from the eNB). In response to the UE's transmission of Message 1, the UE 12 receives a Random Access Response or RAR ("Message 2" in Figures 5 and 6, also labelled (2) in Figure 6) from the network. This contains an UL grant for transmission on PUSCH and a Timing Advance (TA) command for the UE to adjust its transmission timing. Figure 6 shows the details of the RAR, showing the Timing Advance and UL Grant fields as well as (in the case of contention-based access) a Temporary Cell Radio Network Temporary Identifier (T-CRNTI) field, by which the RAR informs the UE of an identifier which it should use in its uplink communications following RACH. In contention-free access, the UE can be assumed already to have a C-RNTI.
(vi) For contention-based access, in response to receiving Message 2 from the network, the UE 12 transmits on PUSCH ("Message 3" in Figures 5 and 6, labelled (3) in Figure 6) using the UL grant and TA information contained in Message 2. Message 3 includes a RRC Connection Request as shown in Figure 6, and is the "subsequent message" whose intended size can be indicated by the choice of signature as mentioned above.

In the case of contention-based access, there is the chance that the same PRACH signature may coincidentally be chosen by another UE also initiating random access. A contention resolution message (not shown) may be sent from eNB 11 in the event that the eNB 11 received the same signature simultaneously from more than one UE, and more than one of these UEs transmitted Message 3. If the UE does not receive any response from the eNB, the UE selects a new signature and sends a new transmission in a RACH sub-frame after a random back-off time.
(vii) Further steps, shown in Figure 6, include a RRC Connection Setup (labelled (4) in Figure 6) by which the eNB responds to the RRC Connection Request, and a reply from the UE in the form of a RRC Connection Setup Complete message as labelled (5) in Figure 6.

Figures 5 and 6 show the signalling sequence in a simplified form. There is also signalling between the eNB and MME 30 and the S-GW of Figure 1.

Figure 7 is a more comprehensive signalling diagram for the case of contention-free access, including this higher-level signalling. As is apparent from Figures 5-7, the network access procedure in LTE is considerably involved and may occupy a significant amount of time, particularly if the initial steps are delayed by difficulty in receiving the SIBs referred to earlier, and/or if there is a need for contention resolution in contention-based access.

Referring again to Fig. 3, another notable physical channel is the Physical Downlink Control Channel, PDCCH. PDCCH carries Downlink Control Information (DCI) indicating the resource assignment in UL or DL for each UE. Although not shown in Fig. 3, a new control channel design (enhanced PDCCH or EPDCCH) has been defined in 3GPP for LTE. This allows transmit DCI messages to be transmitted in the same resources as currently reserved for downlink data (PDSCH).

The motivation for EPDCCH is as follows. A PDCCH transmission typically contains a payload of around 50 bits (including CRC), with additional channel coding to improve robustness to transmission errors. For some applications, for example where some of the UEs are MTc devices, only small data packets are required, so the PDCCH payload may represent a significant overhead. This may be even more significant for some configurations of TDD, with a limited proportion of subframes allocated for DL transmission. In addition, there is a limit on the maximum number of PDCCH messages that can be transmitted at the same time (i.e. within the same subframe), which may be insufficient to support a large number of active UEs transmitting or receiving only small data packets.

Thus, in the sense used in EPDCCH, "enhanced" means an improved provision for PDCCH control messages by making use of alternative resources. It should be noted that the invention to be described uses "enhanced" (and the e- prefix) in a different sense, to refer to providing signals or channels suitable for extended coverage, as will now be explained.

Recently, a need has been identified to provide a relative LTE coverage improvement for MTc devices and other UEs operating delay tolerant MTc applications with respect to their respective nominal coverage. The term "extended coverage mode" (ECM) can be applied to such techniques. Any such coverage enhancement technique will need to take into account relative spectral efficiency impact and cost/power consumption impact, and divergence of solutions between the new UE category/type and other UEs (mentioned above) should be minimised where possible.

### Summary of the Invention

According to a first aspect of the present invention, there is provided a wireless communication method of a cell with a terminal wherein:
a cell permits operation in a normal mode and, at certain time periods, in an extended coverage mode;
the cell transmits information on the time periods of operation of the extended coverage mode; and
a terminal attempts to communicate using the extended coverage mode on the basis of the transmitted information.

Here, "on the basis of the transmitted information" means, for example, that the terminals attempts to use the extended coverage mode only during time periods indicated in the transmitted information, and not at other times. The extended coverage mode may be provided instead of, or in addition to, the normal mode during said certain time periods.

In embodiments, the cell transmits said information on the time periods of operation of the extended coverage mode by broadcasting a schedule for operation of the extended coverage mode, and the terminal stores the schedule. In this way, a schedule for the extended coverage mode is provided in common to all terminals in range of the cell. However, a schedule targeted at a specific terminal (or group of terminals) is also possible.

The "extended coverage mode" implies the use of one or more transmissions from the cell with an increased range (or penetration within coverage holes) compared with transmissions in the normal mode. This increased range can be achieved in various ways. Thus, in embodiments, a signal or channel transmitted in the extended coverage mode differs from a corresponding signal/channel in the normal operation mode in respect of one or more of:
a number of repetitions applied to the transmission;
transmission power used for the transmission,
coding scheme used for the transmission; and
resources used for the transmission.

Signals transmitted in the extended coverage mode may include an enhanced synchronization signal. This facilitates a terminal becoming connected to the cell initially. An example of such an enhanced synchronization signal is a "ePSS/SSS" where "PSS/SSS" is a primary and secondary synchronization signal employed in LTE, and "e" refers both here, and in the following paragraphs to the extended coverage mode of the present invention, in other words a signal characterised in one or more of the ways listed above.

A channel transmitted in the extended coverage mode may include an enhanced broadcast channel containing enhanced system information.

In LTE for example, this includes an ePBCH where PBCH is a Physical Broadcast CHannel and "e" refers to the extended coverage mode of the present invention. In the claims and in the description of the invention, as well as referring to an individual channel such as PBCH, the term "channel" may be understood to include more than one such channel, and thus may also refer to the entirety of the uplink or downlink wireless communication of the terminal with the cell. That is, different ECM schedules may apply on the uplink and downlink respectively or to individual channels within the uplink and downlink.

The enhanced system information may include the information on the time periods of operation for at least one signal or channel in the extended coverage mode.

Signals transmitted in the extended coverage mode may include an enhanced random access signature. Thus, in LTE for example, where PRACH is conventionally used by a terminal attempting to gain access to a cell, this may be replaced in embodiments of the present invention by ePRACH.

A random access signature may be expected to result in a random access response from the cell. In embodiments, signals transmitted in the extended coverage mode include an enhanced random access response, or in other words (for LTE) eRAR in place of, or in addition to, RAR.

The time periods for operation of the extended coverage mode may be determined in various ways. Thus, the extended coverage mode for at least one signal or channel may be scheduled in accordance with at least one of:
a daily pattern of wireless communication traffic in the normal mode;
information on the presence of terminals in low signal strength areas in or around the cell; and
reports from the terminal on a number of attempts to communicate using the extended coverage mode.

In one embodiment, the extended coverage mode for at least one signal or channel operates for a specified part (or parts) of a given time period (such as one day), the overall length of which (for example, a number of hours) is varied in accordance with an amount of wireless communication traffic in the cell.

In some wireless communication systems, a physical downlink control channel (in LTE, PDCCH or EPDCCH) is used to inform a terminal of resource allocations to the terminal for its wireless communication. In one embodiment, the extended coverage mode comprises transmitting scheduling information to the terminal on a physical downlink control channel with extended coverage.

In an embodiment, the cell transmits the information on the time periods of operation of the extended coverage mode only during those periods or immediately before.

The extended coverage mode may comprise a plurality of levels operated in distinct time periods, the levels differing in the number of repetitions, transmission power, coding scheme, and/or resources used for the transmission of the at least one signal/channel.

According to a second aspect of the present invention, there is provided a base station for use in a wireless communication system and arranged to:
provide a cell permitting operation in a normal mode and, at certain time periods, in an extended coverage mode;
transmit information on the time periods of operation of the extended coverage mode; and
receive, from a terminal, a communication made by the terminal using the extended coverage mode on the basis of the transmitted information.

According to a third aspect of the present invention, there is provided a terminal for wireless communication with a base station via a normal mode or an extended coverage mode of operation of the base station; wherein:
the terminal is arranged to receive, from the base station, information on time periods of operation of the extended coverage mode; and
the terminal is arranged to attempt wireless communication with the base station using the extended coverage mode on the basis of the received information.

The above terminal may be a MTc device.

According to a fourth aspect of the present invention, there is provided a wireless communication system comprising a base station and a terminal, wherein:
the base station is arranged to permit wireless communication in a normal mode and, at certain time periods, in an extended coverage mode;
the base station is arranged to transmit information on the time periods of operation of the extended coverage mode; and
the terminal is arranged to attempt wireless communication with the base station using the extended coverage mode on the basis of the transmitted information.

According to a further aspect of the present invention there are provided computer-readable instructions which, when executed by a processor of a transceiver device in a wireless communication system, cause the device to provide the base station or the terminal as defined above.

Thus, embodiments of the present invention provide a method for operating and controlling devices connected to a network which allows the transmission of small data packets after reading System Information. The network can control a cell to allow access from devices using an extended coverage mode (ECM) outside the normal coverage area of the cell. The behaviour described in this invention allows scheduling of initial access from devices in the extended cell coverage area with the use of a pre-defined scheduled time for the devices to access the cell. A transmission of a schedule for ECM operation for the UEs and devices that are using the ECM may be provided after an ECM capable device has been moved from idle to connected mode and could be updated at every scheduled opportunity in connected mode.

With the knowledge of the ECM schedule the system operation can be optimised to provide sufficient ECM for the number and types of devices that are using it in a particular transmission area. The possibility of devices attempting to access the system with the wrong mode will be reduced, leading to a reduction in interference and less disruption to other traffic.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between a terminal and a base station in a wireless communication system. The "terminal" referred to here, also referred to as a subscriber station or UE, may take any form suitable for transmitting and receiving such signals. For the purpose of visualising the invention, it may be convenient to imagine the terminal as a mobile handset but no limitation whatsoever is to be implied from this. In preferred embodiments of the present invention, the base station will typically take the form proposed for implementation in the 3GPP LTE and 3GPP LTE-A groups of standards, and may therefore be described as an eNB (eNodeB) (which term also embraces Home eNB or HeNB) as appropriate in different situations. However, subject to the functional requirements of the invention, the base station may take any other form suitable for transmitting and receiving signals from terminals.

The term "cell" here implies a set of resources (time and frequency allocations) available for DL and/or UL transmission to/from a terminal, and a Cell ID. However, the term "cell" in this specification is to be interpreted broadly. For example, it is possible to refer to communication channels associated with a cell being transmitted from or by the cell (on DL), or transmitted to a cell (on UL), even if the transmission or reception is actually carried out by one or more antennas or antenna ports of a base station. The term "cell" is intended also to include sub-cells, which can be sub-divisions of a cell based on using particular antennas or corresponding to different geographical areas within a cell.

### Brief Description of the Drawings

Reference is made, by way of example only, to the accompanying drawings in which:
Figure 1 shows the basic system architecture in a LTE-based wireless communication system;
Figure 2 shows the system architecture of Fig. 1 modified to include MTc devices;
Figure 3 shows relationships between various uplink channels defined in LTE;
Figure 4 shows timings of Master and System Information Blocks in LTE;
Figure 5 shows in simplified form a random access (RACH) procedure in LTE;
Figure 6 shows the RACH procedure in more detail, including the contents of a random access response (RAR);

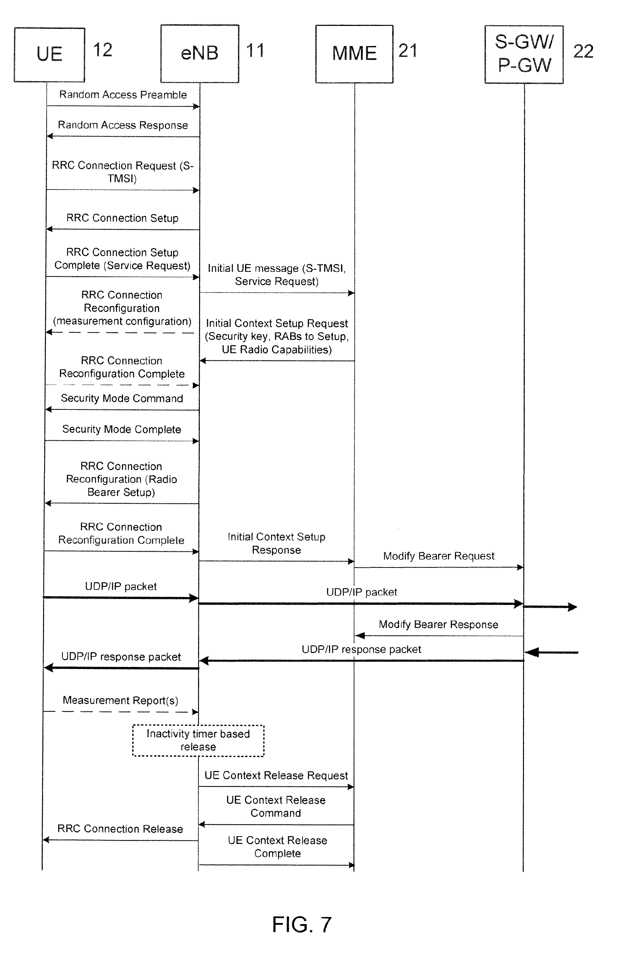

Figure 7 is a detailed signalling diagram showing network entry and subsequent procedures in LTE;

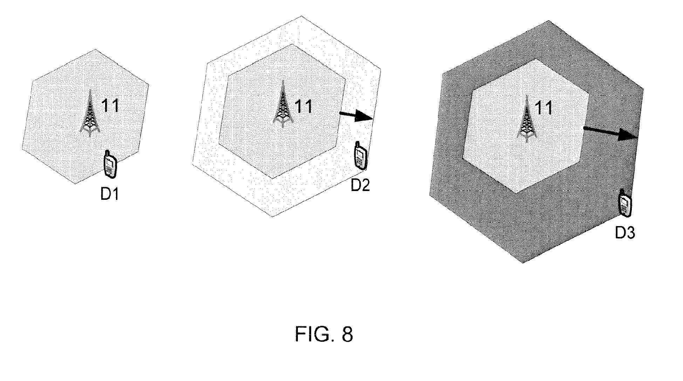

Figures 8 (a) to (c) schematically show the principle of the invention;

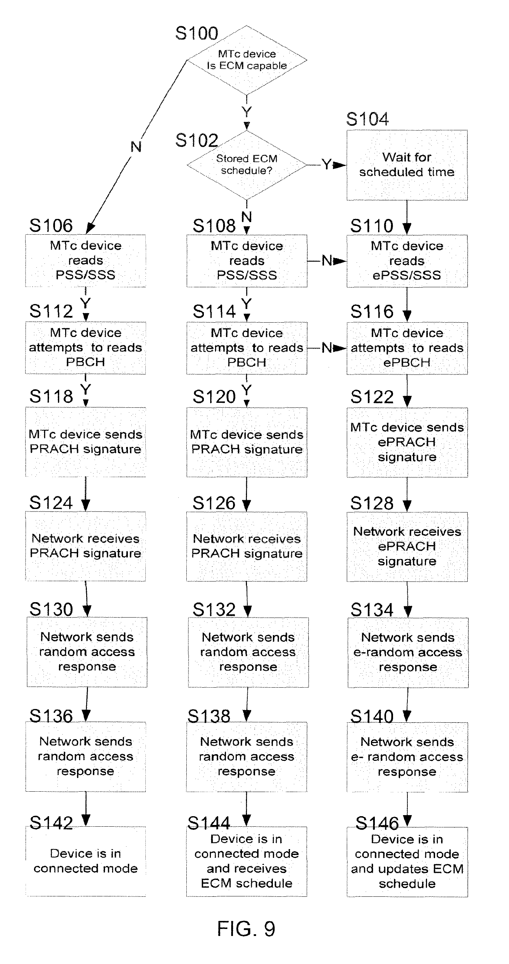

Figure 9 is a flowchart of a procedure in embodiments;

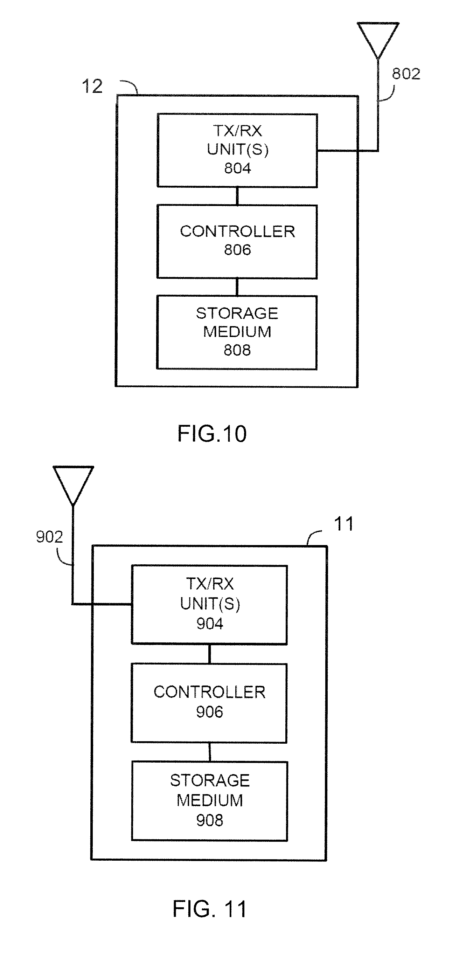

Figure 10 is a schematic diagram of a UE to which the present invention may be applied; and
Figure 11 is a schematic diagram of an eNB to which the present invention may be applied.

### Detailed Description

The embodiments to be described relate to provision of an extended coverage mode (ECM) of operation of a wireless communication system, which is additional to a conventional (or "normal") operating mode and restricted to certain time periods. The purpose of ECM is to allow the transmission of data to and from machine type devices that are located in low signal strength condition areas.

One possible solution is the use of repetition of key system information broadcast by an eNB. Such repetition should allow a machine type device to receive the SIB signal with a lower SNR than normal, potentially going -15dB below cell edge SNR levels. This will lead to the situation where initial access by the machine type device can be delayed significantly due to the time taken to read system information from a cell before attempting to access that cell. Such delays can be alleviated by allowing the device to use stored access parameters in certain circumstances (which is the subject of the applicant's European Patent Application No. 14153559.1).

The use of repeated control channel information including SIB broadcast - one form of an enhanced SIB or eSIB as referred to below - will mean that the UE is allowed to transmit using RACH in geographic areas not currently allowed by a cell. Therefore, some mechanism must exist for the cell to control the use of the enhanced broadcast channels. Also the use of repeated system information and control channels will have an impact on the overall capacity and scheduling flexibility of the base station. Consequently, there is a need to define mechanisms and method of system operation that allow devices to work in low signal strength condition areas whilst at the same time minimising the amount of radio resources that are required.

Embodiments of the present invention employ eSIBs as part of ECM; however, ECM is by no means confined to System Information. In a similar manner, as part of ECM it is possible to conceive of other enhanced (or extended) channels or signals which supplement or replace conventional channels/signals. Firstly, SIBs are contained in PBCH as mentioned in the introduction; thus, eSIBs imply the usage of an ePBCH containing the eSIBs. Moreover, in embodiments of the present invention a UE can perform random access using a new "ePRACH" channel and "eRACH" procedure in place of (or in addition to) the conventional PRACH and RACH. Another example would be the Physical Hybrid-ARQ Indicator CHannel, PHICH, used to send ACK/NACK of received signals, which can be supplemented with a novel ePHICH. It is also possible to employ an ePSS/SSS to maximise the chances of a UE achieving initial synchronization with the cell, although this may not always be necessary since PSS/SSS is inherently low-rate and easy to detect.

Thus, the terms "eSIB", "ePBCH", "ePRACH", "ePHICH" and "ePSS/SSS" refer in this description to new enhanced forms of SIB, PBCH, PRACH, PHICH and PSS/SSS respectively, and which include one or more adaptations which distinguish them from the conventional channels/signals, such as by being transmitted:-
- with additional repetitions,
- with different transmission powers,
- with different coding schemes, or
- on different resources,

in comparison with the conventional (or "legacy") channels or signals.

As will be understood, each of the above ways of distinguishing enhanced channels or signals provides the possibility for increasing the effective range. Increasing the number of repetitions makes it more likely that a signal will be correctly received at the recipient. In the case where this is the sole adaptation employed, the enhanced channel or signal may be regarded as an extension of the corresponding conventional channel/signal. Increasing the transmission power increases the range of a signal or channel. The use of a more robust coding scheme with a lower data rate - such as LDPC (Low Density Parity Check) codes - will make correct decoding easier. Transmission on resources which may be less liable to interference, or which reduce the frequency bandwidth in use to increase the power per unit of bandwidth, will likewise increase the effective range.

The principle of the invention may further be applied to the existing EPDCCH, which although "enhanced" in a different sense than the above as noted earlier, may additionally have repetition applied to provide a range-extended EPDCCH or eEPDCCH.

Embodiments of the present invention propose that the device is made ECM capable by being configured to read system information contained either in enhanced SIBs (eSIBs), and/or the legacy (non-enhanced) SIBs. Being aimed primarily at MTc, the proposal is to provide eSIBs corresponding to those SIBs relevant to MTc devices. Here, the term "SIB" includes, in addition to conventional System Information blocks, any modified System Information Block of the kind previously proposed by the present applicant, such as so-called "SIB2M" which is a reduced version of SIB2 sufficient for MTc devices. Thus, embodiments of the present invention may provide an eSIB1, eSIB2, eSIB2M and so on.

Conceptually the scheme allows the control of the access to the cell by modifying the RACH procedure in the case of the presence of the enhanced SIB broadcast information. This eSIB broadcast is used along with the other DL controls channels in a cell to allow devices the ability to perform enhanced RACH (eRACH) access to the cell where they otherwise could not as they would be out of the range of the cell. Typically RACH/eRACH access is not allowed until certain synchronisation and system information is read from a cell. eRACH access implies use of an ePRACH signature, eRAR and so on. These signals may differ from their conventional counterparts in any of the ways mentioned above with respect to SIBs, PBCH etc.

Embodiments mainly concern providing information to, and control of, the device moving from an idle state to a connected state for the purpose of the transmission or reception of small amounts of data from MTc devices. Typical examples of the MTc devices are smart meters or appliances which can send small amounts of data such as energy readings to the network. As these devices do not typically require the ability to transmit high data rates or have the need for low latency then certain design choices are possible which allow the operation of these devices whilst minimising the effect of them on the other users of a cell (typically mobile handsets).

Generally the use of ECM and the related need for enhanced broadcast of SIB information (eSIB) will be controlled by a particular cell or by a higher layer control function in the network. Unless the enhancements are required it would be part of the normal operation of the cell not to use ECM, as it consumes valuable radio resources that could be used for the serving of user and control traffic to the normal users of that cell. There are several ways that a cell could determine if the eSIB information is required to be used:
(a) The MTc devices may be deployed by a mobile network operator in an area which has poor received signal strength, for example smart meter installation may include a site survey of signal strength, if during the smart meter installation low signal strength is measured then this indication can be used as information that informs the decision process of a given cell to use enhanced SIB information broadcast.
(b) The cell itself may be able to detect that certain types of device are making RACH attempts to the cell but using a certain RACH pre-amble only designated for use by devices suffering from coverage deficit radio conditions.
(c) The cell itself may choose to periodically operate with the enhanced SIB broadcast at certain times (for example during the night); during these times, devices which make access using the information obtained from the enhanced system information can easily be known as they use the modified DL information (such as RACH parameters from SIBs) as part of the UL response messages. The periods of eSIB broadcast form an "ECM schedule".
(d) The need for ECM/eSIBs may be determined by reports from UEs of failed access attempts.
(e) The cell may operate the enhanced SIB broadcast in a ramping mode. For example the amount of range extension that the cell will operate at is typically determined by the amount of repetitions of the DL SIB signalling that is performed. If the cell operate for a given period of time with a small amount of repetitions and looks for access from devices which were unable to access the network, then the cell knows that these devices were not in the original coverage are of the cell. Subsequently more repetitions can be applied to the SIBs from a given cell to allow devices even further away from the cell to make access. The number of repetitions can be included in an ECM schedule.

Figures 8(a) to (c) illustrates a principle in embodiments, whereby ECM involves increasing repetitions of system information to allow more devices to make RACH access to a cell.

The left-hand portion of Figure 8(a) shows the case where initially device (UE) D1 only is allowed to access the cell, corresponding to broadcasting conventional SIBs or in other words non-ECM operation. Figure 8(b) shows a first level of ECM which applies a first amount of repetition to eSIBs, to extend the effective range of the eNB to that shown by the outer hexagon and bring a second device D2 into range. Figure 8(c) shows a second level of ECM in which further repetition is applied to the eSIBs (for example) so as to extend the range still further, so that UE D3 can now read the SI. As mentioned earlier, repetition, although an important enhancement technique, is not the only possible way to provide eSIBs.

Although two levels of extension are illustrated in Figures 8(b) and 8(c), any number of levels may be provided. As will be understood from the introductions, SIBs are contained in PBCH and therefore transmission of eSIBs implies the use of an enhanced PBCH (ePBCH). To facilitate further communication between the UE and cell, other physical channels including PRACH and PDCCH should likewise be supplemented with ePRACH and EPDCCH (where EPDCCH may have repetition applied, in contrast to conventional EPDCCH). Thus, these physical channels are provided in a similar manner to the eSIBs by increasing levels of repetition, transmission power and/or coding scheme. Accordingly, references to "eSIBs" in this description also imply the optional use of these other enhanced channels where appropriate. An ePSS/SSS may also be employed as already mentioned. Different numbers of levels of extension may be applied to specific signals or channels.

Some more specific embodiments of the present invention will now be described. The following description will refer to "UEs", but it should be understood that this term includes MTc devices. MTc devices can be regarded as one class of UEs, to which the present invention is particularly relevant, although the present invention is applicable to other classes of UEs.

In general, unless otherwise indicated, the embodiments described below are based on LTE, where the network comprises multiple eNodeBs and MTc devices are allowed to attach to the network. It is assumed that a normal operation mode of the network, in which devices follow the conventional network access procedure described in the introduction, is available at all times. The normal access procedure is for the UE to receive PSS/SSS, decode PBCH, use the information in the PBCH to receive system information (SIBs), and then transmit RACH. It is further assumed that the network provides ECM only in restricted time periods. In the enhanced coverage mode, the access procedure is assumed to be for the UE to receive PSS/SSS, decode enhanced PBCH, use the information in the ePBCH to receive enhanced system information (eSIBs), and then transmit enhanced RACH.

For simplicity, it will be assumed below that at least one technique used for ECM is repetition and that all physical channels used by the UE have repetition applied.

In a first embodiment, the use of ECM is scheduled for particular times of day (e.g. at night) which would not disturb normal traffic. The PBCH, ePBCH, SIBs, eSIBs are all transmitted continuously. Normally, ePBCH (and thus the eSIBs) are transmitted in different physical layer resources from PBCH (SIBs). One or more of the eSIBs (for example, eSIB1), contains information describing the schedule when ECM operation is available (e.g. time of day or in terms of system frame number).

Here the schedule may relate to one or more channels, and may comprise different schedules for different channels. For example, the schedules for uplink ePUSCH and downlink ePDSCH may be different. Part of the schedule (e.g. for transmission of eSIBs) may be pre-defined. Part of the schedule may be implicit; for example, if a schedule is signalled for the control channel ePDCCH or eEPDCCH, this may also implicitly define a corresponding schedule for PDSCH and associated downlink transmission of ACK/NACKs on ePHICH.

Thus, the eSIBs may differ in information content from conventional SIBs at least by including the schedule. UEs able to read SIBs operate in the normal way and can access the system by transmission of RACH, and use the physical channels in the normal way. Such UEs can ignore eSIBs (and indeed may be unable to decode them, if not configured to expect ePBCH with the repetitions or on the transmission resources employed).

UEs unable to read SIBs but able to read eSIBs can determine the ECM schedule and access the system during periods of ECM availability using eRACH, followed by use of physical channels employing repetition. The eSIBs can contain parameters for eRACH and other channels, such as number of repetitions, repetition sequence, and time/frequency resources to be used. Parameters for eRACH may include, for example, a subset of random access preambles set aside for use of UEs in "Message 1" (see Figure 5); different time and frequency coding may also be specified.

As a variation the ECM schedule is not broadcast (not included with any SIBs) but sent using UE specific signalling, or implicitly indicated or pre-determined. In this way, it is possible to define an ECM schedule on a per-UE basis, rather than for all UEs in the (extended) cell.

In a second embodiment, a variation of the first embodiment, ECM uses EPDCCH instead of PDCCH for scheduling UL and DL data transmissions (while normal operation may use both PDCCH and EPDCCH, but not normally in the same subframe). The ePBCH may contain parameters describing the EPDCCH resources or these resources may be pre-determined. Note that normally, reception of PDCCH is required to read SIBs and reception of EPDCCH would be required to read eSIBs. In any case repetition or other means of enhancing coverage would need to be applied to PDCCH or EPDCCH in order that they can be used for ECM. Thus, in this embodiment, EPDCCH becomes a novel "eEPDCCH", that is, an EPDDCH with repetition.

In a third embodiment, another variation of the first embodiment, the ECM schedule is periodic (e.g. ECM is in force for a continuous period of 10 minutes within every hour, or 2 hours every day). Alternatively, multiple time periods per hour, day or week may be defined. The parameters are broadcast in the eSIBs. In a further variation the ECM schedule is more flexibly configurable (e.g. depending on traffic levels). Thus, the continuous period, or the total duration of multiple periods, would be reduced if there is relatively high demand of "normal" traffic in the cell. On the other hand, high demand for use of the ECM (for example as evidenced by the number of ePRACH attempts received) could be a criterion for extending the periods of ECM operation. Both timing of ECM and numbers of repetitions may be specified in eSIBs.

In a fourth embodiment, another variation of the first embodiment, the eSIBs are not transmitted except during the period (or periods) of ECM availability and perhaps a short period before hand, but ePBCH is transmitted continuously. In this instance, ePBCH broadcast outside those periods would just contain MIB and PSS/SSS, similar to conventional PBCH. In a further variation eSIBs and ePBCH are both only transmitted during a period of ECM availability.

In a fifth embodiment, a mobile network operator surveys an area which has poor received signal strength and stores information on signal strength and MTc devices installed, for later use in ECM. For example, smart meter installation may include a site survey of signal strength; if during the smart meter installation low signal strength is measured, then this information is stored to inform the decision process of a given cell to use enhanced SIB information broadcast. An eNB of the cell (or higher level node) then devises the ECM schedule on the basis of the stored information.

In a sixth embodiment, a UE can store in its memory the number of repetitions which the UE needed to decode ePBCH, and the signal strength and success or not of decoding PBCH and/or ePBCH, for later reporting to the network. The network would use this information to update the ECM schedule in order to maximise efficiency of the use of radio resources.

In a seventh embodiment, the ECM schedule supports different amounts of coverage enhancement at different times (e.g. different amounts of repetition). The UE may determine the required amount of ECM (e.g. repetitions) it requires (and the appropriate time to attempt access), for example by recording failed/successful access attempts. Alternatively, the amount of ECM for a UE may be configured by the network. This feature can be combined with a per-UE ECM schedule as mentioned earlier.

In an eighth embodiment, the principle of the invention is applied to multiple adjacent or overlapping cells controlled by different eNBs. The eNBs co-ordinate their respective ECM schedules to avoid mutual interference, since the effect of applying ECM is to temporarily increase the effective area of a cell. By exchanging information among the eNBs, it can be ensured that only one cell at a time employs ECM, thus minimising interference to devices in other cells.

An algorithm followed by MTc devices in embodiments of the present invention will now be described with respect to Figure 9.

As will be apparent from the foregoing discussion, a feature of embodiments is the transmission of a schedule for ECM operation to the UEs and devices that are using the ECM. With the knowledge of the ECM schedule the system operation can be optimised to provide sufficient ECM for the number and types of devices that are using it in a particular transmission area. In Figure 9, the algorithm begins at step S100 with a check of whether the MTc device is ECM-capable, that is to say, whether or not the device is configured to receive the enhanced channels/signals provided in the present invention.

If not, (S100, "N"), the flow proceeds to the left-hand branch of Figure 9, steps S106 to S142, by which the device follows the conventional procedure for connecting to the cell. Thus, as outlined in the introduction, the device reads PSS/SSS (step S106); receiving PSS/SSS is a prerequisite in this case since no alternative is available; consequently the device must wait as long as it takes to complete S106. Having read PSS/SSS, the device then attempts to read PBCH (S108). Success in reading PBCH allows the device to perform random access as shown in Figure 5 (steps S118, S124, S130, and S136). Note that step S136 is a repetition of step S130, sending RAR, in case of contention-based access.

Completion of the random access procedure (shown in more detail in Figure 7) results in the device being in connected mode at step S142.

In step S100, if the MTc device is ECM capable, (S100, "Y") then flow proceeds to S102 where the device checks whether it has stored an ECM schedule. This step may include a check to confirm that the schedule is still in force, for example that a time limit specified in the schedule has not expired.

If not (S102, "N") then (in this example) flow proceeds to S108 where the device attempts to read PSS/SSs. If the attempt fails (S108, "N"), the flow proceeds to S100 wherein the device attempts instead to read ePSS/SSS. Being transmitted with additional repetitions and/or higher power etc. compared with PSS/SSS, there is a greater chance of a device located in an area of poor signal strength to receive ePSS/SSS.

Assuming that PSS/SSS is successfully read in S108, the device attempts to read PBCH (S144). In this instance, if PBCH cannot be read (S114, "N"), the device has the option to use step S116 and attempt to read ePBCH, which (if it happens to be being transmitted at the time) may likewise be easier for a device in a poor signal strength area. If S114 is successful, however, normal procedure is followed in steps S120, S126, S132, S138 and S144. The only difference is that in Step S144, the ECM-capable device receives the ECM schedule for future use.

If the device knows the ECM schedule (S102, "Y") then it proceeds to S104 and waits for a period in which ECM is in force according to the schedule. The device then knows that ePSS/SSS is being transmitted, and reads it at step S110 (after any required number of attempts). The flow then proceeds to S116 where ePBCH is read, which again may require multiple attempts. Having read ePBCH, the device knows the preambles available for ePRACH. The random access procedure then follows in steps S122, S128, S134, and S140 in an analogous fashion to that outlined in the introduction with reference to Figures 5 to 7, except that the above mentioned ePRACH, eRAR are employed in place of the conventional versions, eRAR involving (additional) repetition and/or higher transmission power compared with RAR.

The flow ends at S146 with the device in connected mode and having received the current ECM schedule, which can be used to update the stored version.

The scheme shown in Figure 9 is only an example, and many variations are possible. For example there may be no "ePSS/SSS" and synchronization may rely on "PSS/SSS". Devices could attempt to read ePSS/SSS even without knowing the schedule, on the off-chance that it is being broadcast currently, or the ECM schedule may be broadcast, so that S102 is not needed.

As already mentioned, ECM can be provided by repetition, but enhanced channels or signals can be provided by other alternative or additional means, such as increased power, very low rate codes, or reduced bandwidth (with the same power). These measures may be scheduled collectively or separately for physical channels in the same way as repetition. For a given transmission power, reducing the bandwidth increases the transmission power per unit bandwidth, allowing reception with higher path loss, at the cost of reducing the data rate. Alternatively, or in addition, it would be possible to identify a sub-band with best signal strength (least interference) in order to maximise the chances of reception.

Figure 10 is a block diagram illustrating an example of a UE 12 to which the present invention may be applied. The UE 12 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 12 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, including detecting ePBCH, extracting an eSIB, determining the ECM schedule and so on. For example, the various functions described above may be embodied in the form of a computer program stored in the storage medium 808 and executed by the controller 806. The transmission/reception unit 804 is arranged, under control of the controller 806, to receive ePBCH, transmit on eRACH, and so forth as discussed previously.

Figure 11 is a block diagram illustrating an example of an eNB 11 to which the present invention may be applied. The eNB 11 includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, including broadcasting channels such as PBCH and ePBCH, receiving a RA preamble from the UE on RACH or eRACH and responding, and so forth. For example, the various functions described above may be embodied in the form of a computer program stored in the storage medium 908 and executed by the controller 906. The transmission/reception unit 904 is responsible for UE-specific signalling and broadcast messages under control of the controller 906.

To summarise, embodiments of the present invention provide a method for operating and controlling devices connected to a network which allows the transmission of small data packets after reading System Information. The network can control a cell to allow access from devices using an extended coverage mode (ECM) outside the normal coverage area of the cell. Initial access from devices in the extended cell coverage area can be scheduled with the use of a pre-defined scheduled time for the devices to access the cell. A transmission of a schedule for ECM operation to the UEs and devices that are using the ECM is provided after an ECM capable device has been moved from idle to connected mode for the first time, and can be updated at every scheduled opportunity when the device subsequently moves to connected mode. In addition, embodiments of the present invention provide a modified RACH procedure to be followed by devices taking advantage of the ECM.

Various modifications are possible within the scope of the invention.

The invention has been described with reference to LTE/LTE-A but can also be applied to other communications systems such as UMTS and WiMAX.

The term "cell" is to be interpreted broadly. Whilst a "cell" generally implies both a DL and UL, this is not necessarily the case and the present invention may be applied to a DL-only, or UL-only cell.

As mentioned earlier, the "schedule" is not necessarily a single schedule, but may consist of multiple schedules for various channels, and at least a part of the schedule(s) may be pre-defined or implicit.

Any of the embodiments and variations mentioned above may be combined in the same system. Features of one embodiment may be applied to any of the other embodiments.

In any of the aspects or embodiments of the invention described above, the various features may be implemented in hardware, or as software modules running on one or more processors.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

### Industrial Applicability

With the knowledge of the ECM schedule, the system operation can be optimised to provide sufficient ECM for the number and types of devices that are using it in a particular transmission area. The possibility of devices attempting to access the system with the wrong mode will be reduced, leading to a reduction in interference and less disruption to other traffic.

## Claims

1. A wireless communication method of a cell with a terminal wherein:
a cell permits operation in a normal mode and, at certain time periods, in an extended coverage mode;
the cell transmits information on the time periods of operation of the extended coverage mode; and
a terminal attempts to communicate using the extended coverage mode on the basis of the transmitted information.

2. The method according to claim 1 wherein the cell transmits said information on the time periods of operation of the extended coverage mode by broadcasting a schedule for operation of the extended coverage mode for at least one signal or channel, and the terminal stores the schedule.

3. The method according to claim 1 or 2 wherein a signal or channel transmitted in the extended coverage mode differs from a corresponding signal or channel in the normal operation mode in respect of one or more of:
a number of repetitions applied to the transmission;
transmission power used for the transmission,
coding scheme used for the transmission; and
resources used for the transmission.

4. The method according to claim 3 wherein a signal transmitted in the extended coverage mode includes an enhanced synchronization signal.

5. The method according to claim 3 or 4 wherein a channel transmitted in the extended coverage mode includes an enhanced broadcast channel containing enhanced system information.

6. The method according to claim 5 wherein the enhanced system information includes the information on the time periods of operation of the extended coverage mode.

7. The method according to claim 3, 4, 5, or 6 wherein a signal transmitted in the extended coverage mode includes an enhanced random access signature.

8. The method according to claim 7 wherein a signal transmitted in the extended coverage mode includes an enhanced random access response.

9. The method according to any preceding claim wherein the extended coverage mode for at least one signal or channel is scheduled in accordance with at least one of:
a daily pattern of wireless communication traffic in the normal mode;
information on the presence of terminals in low signal strength areas in or around the cell;
reports from the terminal on a number of attempts to communicate using the extended coverage mode.

10. The method according to any preceding claim wherein the extended coverage mode for at least one signal or channel operates for at least one specified part of a given time period, the length of the specified part being varied in accordance with an amount of wireless communication traffic in the cell.

11. The method according to any preceding claim wherein the extended coverage mode comprises transmitting scheduling information to the terminal on a physical downlink control channel with extended coverage.

12. The method according to any preceding claim wherein the cell transmits the information on the time periods of operation of the extended coverage mode only during those periods or immediately before.

13. The method according to claim 2 or 3 wherein the extended coverage mode comprises a plurality of levels operated in distinct time periods, the levels differing in the number of repetitions, transmission power, coding scheme, and/or resources used for the transmission of the at least one signal or channel.

14. A base station for use in a wireless communication system and arranged to:
provide a cell permitting operation in a normal mode and, at certain time periods, in an extended coverage mode;
transmit information on the time periods of operation of the extended coverage mode;
and
receive, from a terminal, a communication made by the terminal using the extended coverage mode on the basis of the transmitted information.

15. A terminal for wireless communication with a base station via a normal mode or an extended coverage mode of operation of the base station; wherein:
the terminal is arranged to receive, from the base station, information on time periods of operation of the extended coverage mode; and
the terminal is arranged to attempt wireless communication with the base station using the extended coverage mode on the basis of the received information.

16. A wireless communication system comprising a base station and a terminal, wherein:
the base station is arranged to permit wireless communication in a normal mode and, at certain time periods, in an extended coverage mode;
the base station is arranged to transmit information on the time periods of operation of the extended coverage mode; and
the terminal is arranged to attempt wireless communication with the base station using the extended coverage mode on the basis of the transmitted information.

## Amended claims

### Amended claims in accordance with Rule 137(2) EPC.

1. A wireless communication method of a cell with a terminal (12) wherein:
a cell permits operation in a normal mode and, at certain time periods, in an extended coverage mode;
the cell transmits information on operation of the extended coverage mode; and
a terminal (12) attempts to communicate using the extended coverage mode on the basis of the transmitted information; **characterised in that**:
the cell transmits said information on operation of the extended coverage mode by broadcasting a schedule of time periods of operation of the extended coverage mode for at least one signal or channel, and the terminal (12) stores the schedule.

2. The method according to claim 1 wherein a signal or channel transmitted in the extended coverage mode differs from a corresponding signal or channel in the normal operation mode in respect of one or more of:
a number of repetitions applied to the transmission;
transmission power used for the transmission,
coding scheme used for the transmission; and
resources used for the transmission.

3. The method according to claim 2 wherein a signal transmitted in the extended coverage mode includes an enhanced synchronization signal.

4. The method according to claim 2 or 3 wherein a channel transmitted in the extended coverage mode includes an enhanced broadcast channel containing enhanced system information.

5. The method according to claim 4 wherein the enhanced system information includes the schedule of time periods of operation of the extended coverage mode.

6. The method according to claim 2, 3, 4, or 5 wherein a signal transmitted in the extended coverage mode includes an enhanced random access signature.

7. The method according to claim 6 wherein a signal transmitted in the extended coverage mode includes an enhanced random access response.

8. The method according to any preceding claim wherein the extended coverage mode for at least one signal or channel is scheduled in accordance with at least one of:
a daily pattern of wireless communication traffic in the normal mode;
information on the presence of terminals in low signal strength areas in or around the cell;
reports from the terminal (12) on a number of attempts to communicate using the extended coverage mode.

9. The method according to any preceding claim wherein the extended coverage mode for at least one signal or channel operates for at least one specified part of a given time period, the length of the specified part being varied in accordance with an amount of wireless communication traffic in the cell.

10. The method according to any preceding claim wherein the extended coverage mode comprises transmitting scheduling information to the terminal (12) on a physical downlink control channel with extended coverage.

11. The method according to any preceding claim wherein the cell transmits the schedule of time periods of operation of the extended coverage mode only during those periods or immediately before.

12. The method according to claim 1 or 2 wherein the extended coverage mode comprises a plurality of levels operated in distinct time periods, the levels differing in the number of repetitions, transmission power, coding scheme, and/or resources used for the transmission of the at least one signal or channel.

13. A base station (11) for use in a wireless communication system and arranged to:
provide a cell permitting operation in a normal mode and, at certain time periods, in an extended coverage mode;
transmit information on operation of the extended coverage mode; and
receive, from a terminal (12), a communication made by the terminal using the extended coverage mode on the basis of the transmitted information; **characterised in that**:
the base station (11) is arranged to transmit said information on operation of the extended coverage mode by broadcasting a schedule of time periods of operation of the extended coverage mode for at least one signal or channel.

14. A terminal (12) for wireless communication with a base station (11) via a normal mode or an extended coverage mode of operation of the base station; wherein:
the terminal (12) is arranged to receive, from the base station (11), information on operation of the extended coverage mode; and
the terminal (12) is arranged to attempt wireless communication with the base station (11) using the extended coverage mode on the basis of the received information; **characterised in that**:
the terminal (12) is arranged to receive said information on operation of the extended coverage mode by receiving a broadcast from the base station (11) of a schedule of time periods of operation of the extended coverage mode for at least one signal or channel, and is further arranged to store the schedule.

15. A wireless communication system comprising a base station (11) and a terminal (12), wherein:
the base station (11) is arranged to permit wireless communication in a normal mode and, at certain time periods, in an extended coverage mode;
the base station (11) is arranged to transmit information on operation of the extended coverage mode; and
the terminal (12) is arranged to attempt wireless communication with the base station using the extended coverage mode on the basis of the transmitted information; **characterised in that**:
the base station (11) is arranged to transmit said information on operation of the extended coverage mode by broadcasting a schedule of time periods of operation of the extended coverage mode for at least one signal or channel; and
the terminal (12) is arranged to receive said broadcast and store the schedule.
